# EUROPEAN PATENT APPLICATION

(11) **EP 3 459 761 A1**
(43) Date of publication of application: **27.03.2019**
(21) Application number: 17799485.2
(22) Date of filing: 18.05.2017
(51) Int. Cl.: B60C 5/01, B60C 9/20, B60C 13/00, B60C 5/00, B60C 9/18

(54) **TIRE**

(30) Priority: 20.05.2016 JP 2016101858
(71) Applicant: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2017/018748
(87) International publication number: WO 2017/200061

(57) **Abstract**

A tire is provided with a tire frame member that is made from resin and has a pair of bead portions, a pair of side portions that extend from the bead portions towards an outer side in a tire radial direction, and a crown portion that connects an outer side end in the tire radial direction of one side portion to an outer side end in the tire radial direction of another side portion, and with a crossing belt layer that is provided with plural reinforcing cords that are arranged in rows which are inclined relative to a tire rotation axis of the tire frame member and are coated with a resin material. The crossing belt layer is disposed either directly or via a resin layer on an outer side surface in the tire radial direction of the crown portion.

## Description

### Technical Field

The present disclosure relates to a tire in which a tire frame member is formed using a resin material.

### Background Art

Because of their light weight and ease of recycling, using thermoplastic resins and thermoplastic elastomers and the like as tire materials has been proposed. A pneumatic tire in which, for example, the tire main body is molded using a thermoplastic high-polymer material has been disclosed as a tire of this type (see, for example, Japanese Patent Application (JP-A) No. H05-116504). According to JP-ANo H05-116504, a pneumatic tire is formed by vulcanizing a belt structural body, which includes a reinforcing layer in which reinforcing cords are arranged such that they extend diagonally relative to the tire circumferential direction, together with tread rubber in a vulcanization mold so as to form a single integrated body.

### SUMMARY OF THE INVENTION

### Technical Problem

If a tire frame member that is made from resin such as a thermoplastic resin is used, there are times when it is desired that a thinner tire frame member be formed. In such cases, it is desirable that an outer circumferential surface of the tire frame member be reinforced by a component such as a crossing belt or the like, so as to improve the rolling resistance and durability and the like of the tire. However, as is the case in Patent Document 1, there is room for improvement regarding the in-plane rigidity of the rubber-coated reinforcing cords, so that scope for improving the rolling resistance and durability and the like of a tire still remains.

The present disclosure was conceived in view of the above-described circumstances, and it is an object thereof to provide a tire that is provided with a crossing belt layer having superior in-plane rigidity.

### Solution to the Problem

(1) A tire is provided with a tire frame member that is made from resin and has a pair of bead portions, a pair of side portions that extend from the bead portions towards an outer side in a tire radial direction, and a crown portion that connects an outer side end in the tire radial direction of one side portion to an outer side end in the tire radial direction of another side portion, and with a crossing belt layer that is provided with a plurality of reinforcing cords that are arranged in rows which are inclined relative to a tire rotation axis of the tire frame member and are coated with a resin material. The crossing belt layer is disposed either directly or via a resin layer on an outer side surface in the tire radial direction of the crown portion.

### Advantageous Effects of the Invention

According to the present disclosure, it is possible to provide a tire that is provided with a crossing belt layer having superior in-plane rigidity.

### BRIEF DESCRIPTION OF THE DRAWINGS

FIG. 1 is a cross-sectional view taken in a tire width direction showing the structure of a tire according to a first exemplary embodiment.
FIG. 2 is a diagonal cross-sectional view taken in the tire width direction showing a portion of the structure of the tire according to the first exemplary embodiment.
FIG. 3 is an explanatory view illustrating an angle of inclination and an angle of intersection of reinforcing cords.
FIG. 4A is an explanatory view showing an example of a method of manufacturing belt pieces.
FIG. 4B is an explanatory view showing an example of a method of manufacturing belt pieces continuing from FIG. 4A.
FIG. 5 is an explanatory view showing an example of a shape of belt piece ends.
FIG. 6 is a cross-sectional view taken in a tire width direction showing the structure of a tire according to a second exemplary embodiment.

### DESCRIPTION OF THE EMBODIMENTS

A tire according to the present disclosure is provided with a tire frame member that is made from resin and has a pair of bead portions, a pair of side portions that extend from the bead portions towards an outer side in a tire radial direction, and a crown portion that connects an outer side end in the tire radial direction of one side portion to an outer side end in the tire radial direction of another side portion, and with a crossing belt layer that is provided with a plurality of reinforcing cords that are arranged in rows which are inclined relative to a tire rotation axis of the tire frame member and are coated with a resin material, and that is disposed either directly or via a resin layer on an outer side surface in the tire radial direction of the crown portion. In the tire of the present disclosure, because the reinforcing cords that form the crossing belt layer are coated with a resin material, the in-plane rigidity of the crossing belt layer is superior compared to when a crossing belt layer whose reinforcing cords are coated with rubber is used. Because of this, it is possible to reduce the rolling resistance of the tire and improve the durability thereof. Note that the in-plane rigidity of the crossing belt layer can be measured, for example, using JIS K 7019.

Furthermore, in the tire of the present disclosure, the tire frame member and the crossing belt layer are mutually superimposed either directly or via a resin layer. The reason for this is that, in the tire of the present disclosure, because each the tire frame member and crossing belt layer are formed so as to contain resin, it is possible to increase the bonding strength of each component. Note that, in the present specification, the term 'resin' encompasses thermoplastic resins and thermosetting resins, however, it does not include natural rubbers.

### [First Exemplary Embodiment]

Hereinafter, a first exemplary embodiment of the present disclosure will be described with reference made to the drawings. Note that an arrow W in the drawings indicates a direction (hereinafter, referred to on occasion as a tire width direction) that is parallel with the tire rotation axis, and an arrow R indicates a direction (hereinafter, referred to on occasion as a tire radial direction) that passes through the tire rotation axis and is orthogonal to the tire width direction. Additionally, an arrow C indicates a circumferential direction (hereinafter, referred to on occasion as a tire circumferential direction) of a circle that is centered on the tire rotation axis. Moreover, 'radial direction' refers to a direction that is orthogonal to the tire circumferential direction. Furthermore, a single-dot chain line CL indicates a center line of a tire.

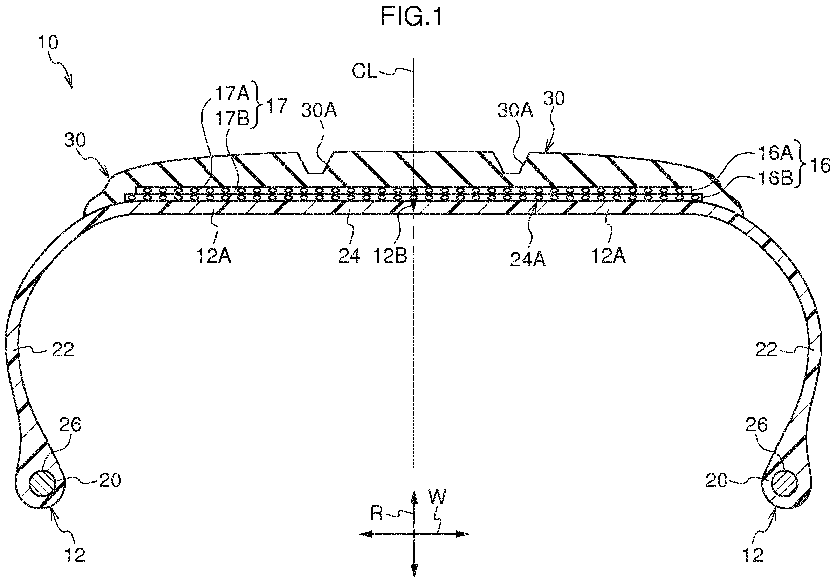

The structure of the tire according to the first exemplary embodiment will now be described. FIG. 1 is a cross-sectional view taken in the tire width direction showing the structure of the tire according to the first exemplary embodiment. As is shown in FIG. 1, the tire 10 according to the first exemplary embodiment is provided with a tire frame member 12 which is formed from resin, a crossing belt layer 16, and tread rubber 30. The crossing belt layer 16 has a layered structure that is provided with a first crossing belt layer 16A and a second crossing belt layer 16B.

### (Tire Frame Member)

The tire frame member 12 is formed from a resin material, and is formed in a toroidal shape by joining a pair of tire pieces 12A together in the tire axial direction. Note that it is also possible for the tire frame member 12 to be formed by joining together three or more tire pieces 12A.

The tire frame member 12 has a pair of bead portions 20, a pair of side portions 22 that extend towards an outer side in the tire radial direction respectively from the pair of bead portions 20, and a crown portion 24 that extends towards an inner side in the tire width direction from the side portions 22. Note that each bead portion 20 is a portion extending from an inner side end in the tire radial direction of the tire frame member 12 as far as 30% of a cross-sectional height thereof, while the crown portion 24 is a portion thereof where the tread rubber 30 is disposed, and each side portion 22 is a portion that connects together the bead portions 20 and the crown portion 24.

A thermoplastic resin having an equivalent elasticity to the rubber used in a typical tire, a thermoplastic elastomer (TPE), or a thermosetting resin or the like can be used as the resin material forming the tire frame member 12. Considering the elasticity during running and moldability during manufacturing thereof, it is desirable that a thermoplastic elastomer be used. Note that it is possible for the entire tire frame member 12 to be formed from the above-described resin material, or for only a portion thereof to be formed from the above-described resin material.

Examples of a thermoplastic elastomer include a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), and a dynamically cross-linked thermoplastic elastomer (TPV), and the like.

Examples of a thermoplastic resin include polyurethane resin, polyolefin resin, vinyl chloride resin, and polyamide resin and the like. Furthermore, as the thermosetting material it is also possible to use materials having, for example, a deflection temperature under load (under a load of 0.45 MPa) as stipulated in ISO75-2 or ASTM D648 of 78°C or more, a tensile yield strength as stipulated in JIS K7113 : 1995 of 10 MPa or more, a tensile elongation at break (JIS K7113) as stipulated in the same JIS K7113 : 1995 of 50 % or more, and a Vicat softening temperature (method A) as stipulated in JIS K7206 : 1999 of 130°C or more. A known resin can be appropriately selected and used as the thermosetting resin.

When the tire 10 is being fitted onto a rim (not shown in the drawings), a portion of the bead portions 20 comes into contact with the rim. A bead core 26 is embedded in each bead portion 20. Each bead core 26 is formed by winding a bead cord a plurality of times in a circular shape, or by molding into a toroidal shape a cable cord which is formed by twisting together a plurality of bead cords. Metal, organic fibers, or organic fibers covered by resin, or alternatively, a hard resin or the like can be used as the material forming the bead cores 26. Note that it is also possible to omit the bead cores 26 provided that the rigidity of the bead portions 20 is ensured and there are no problems when the bead portions 20 are engaged with a rim.

The side portions 22 are positioned on both sides in the tire width direction of the tire frame member 12, and are continuous with the outer side in the tire radial direction of the pair of bead portions 20. The side portions 22 are gently curved from the bead portions 20 so as to protrude towards the outer side in the tire axial direction as they approach the crown portion 24.

The crown portion 24 connects an outer side end in the tire radial direction of one side portion 22 to an outer side end in the tire radial direction of the other side portion 22, and supports the tread rubber 30 that is disposed on the outer side thereof in the tire radial direction. In the present exemplary embodiment, the crown portion 24 has a substantially uniform thickness, and a surface thereof on the outer side in the tire radial direction (i.e., an outer circumferential surface 24A in FIG. 1) is formed having a planar configuration in the tire width direction. In other words, a distance to the tire axis is substantially uniform from one end in the tire width direction of the outer circumferential surface 24A of the crown portion 24 to the other end in the tire width direction thereof. The outer circumferential surface 24A of the crown portion 24 is the portion on which the crossing belt layer 16 (described below) is disposed.

Note that, in the present exemplary embodiment, the outer circumferential surface 24A of the crown portion 24 is formed having a planar configuration in the tire width direction, however, the present disclosure is not limited to this structure, and it is also acceptable if the outer circumferential surface 24A is not formed having a planar configuration in the tire width direction. For example, the outer circumferential surface 24A of the crown portion 24 may also be formed having a curved shape that bulges towards the outer side in the tire radial direction (i.e., so as to have a circular arc-shaped cross-section).

The tire frame member 12 is formed by fusing the pair of tire pieces 12A together at a center portion 12B in the tire width direction of the crown portion 24. Note that the tire frame member 12 may also be formed by interposing a joining member which is made of resin in the vicinity of the center portion in the tire width direction of the crown portion 24, and then joining the tire pieces 12A together. A thermoplastic resin or a molten resin of either the same type or a different type as that used for the tire pieces 12A can be used for the joining member.

The thickness of the crown portion 24 of the tire frame member 12 can be appropriately selected so as to adjust the flexural modulus of elasticity and the like, however, in consideration of the tire weight and the like, this thickness is preferably between, for example, 0.5 mm and 10 mm and preferably between 1 m and 5 mm, and more preferably between 1 mm and 4 mm. In the same way, the thickness of the side portions 22 of the tire frame member can be set to between, for example, 0.5 mm and 10 mm, and more preferably between 1 mm and 5 mm. The thicknesses of the crown portion 24 and the side portions 22 of the tire frame member 12 can be appropriately measured using a known method and apparatus.

### (Crossing Belt layer)

The crossing belt layer 16 is disposed directly on the outer circumferential surface 24A of the crown portion 24 so as to encircle the tire 10 in the circumferential direction thereof. In addition, the crossing belt layer 16 has a layered structure in which the second crossing belt layer 16B and the first crossing belt layer 16A are mutually superimposed in that sequence towards the outer side in the tire radial direction. In the present exemplary embodiment, the outer circumferential surface 24A (i.e., the outer side surface thereof in the tire radial direction) of the crown portion 24, and the inner side surface in the tire radial direction of the second crossing belt layer 16B are welded directly to each other by heat. Furthermore, in the present exemplary embodiment, the outer side surface in the tire radial direction of the first crossing belt layer 16A and the tread rubber 30 are adhered to each other via vulcanization adhesion.

The first crossing belt layer 16A and the second crossing belt layer 16B are each provided with a plurality of reinforcing cords 17 (i.e., first reinforcing cords 17A and second reinforcing cords 17B in FIG. 1). The reinforcing cords 17 are coated with a resin material, and are arranged so as to extend diagonally relative to the tire circumferential direction. Additionally, the plurality of reinforcing cords 17 are lined up at predetermined intervals from each other in the tire circumferential direction.

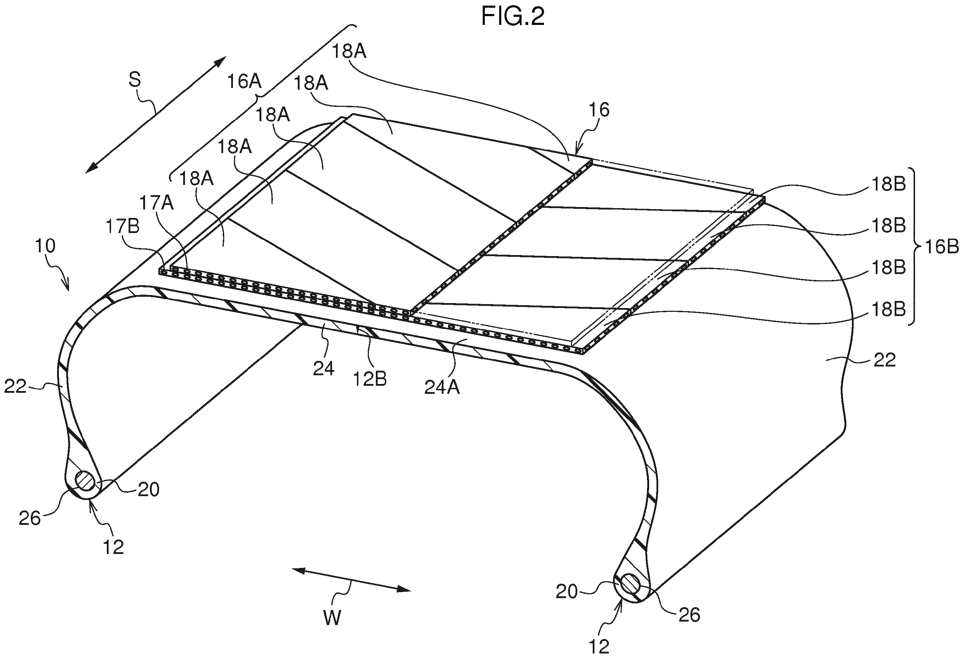

The structure of the crossing belt layer 16 will now be described using FIG. 2. FIG. 2 is a diagonal cross-sectional view taken in the tire width direction showing a portion of the structure of the tire according to the first exemplary embodiment. In FIG. 2, components that are the same as in FIG. 1 are given the same descriptive symbols and any description thereof is omitted. As is shown in FIG. 2, the crossing belt layer 16 has a layered structure which is provided with the first crossing belt layer 16A and the second crossing belt layer 16B. The first crossing belt layer 16A and the second crossing belt layer 16B are provided respectively with the plurality of first reinforcing cords 17A and second reinforcing cords 17B. Note that, in FIG. 2, in order to simplify the description, a portion of the first crossing belt layer 16A is shown by dotted lines.

As is shown in FIG. 2, the first crossing belt layer 16A is formed by a plurality of belt pieces 18A that are arranged next to each other in a tire circumferential direction S. In the same way, the second crossing belt layer 16B is formed by a plurality of belt pieces 18B that are arranged next to each other in the tire circumferential direction S. The belt pieces 18A and the belt pieces 18B are arranged consecutively in the tire circumferential direction S on the outer circumferential surface 24A of the crown portion 24. The belt pieces 18A and the belt pieces 18B are provided with the plurality of reinforcing cords 17 that are embedded in a resin material. In other words, the belt pieces 18A and the belt pieces 18B have a structure in which the first reinforcing cords 17A and the second reinforcing cords 17B, which are coated with a resin material, are arranged in parallel rows in the tire circumferential direction.

To form the crossing belt layer 16, firstly, the second crossing belt layer 16B is formed by arranging the plurality of belt pieces 18B consecutively in the tire circumferential direction S on the outer circumferential surface 24A of the crown portion 24. Next, the first crossing belt layer 16A is formed by arranging the plurality of belt pieces 18A consecutively in the tire circumferential direction S on the second crossing belt layer 16B. As a consequence, the crossing belt layer 16 having a layered structure can be formed.

The welding method used to weld together the outer circumferential surface 24A of the crown portion 24 and the second crossing belt layer 16B is not particularly limited. For example, a structure may be employed in which the surface of the outer circumferential surface 24A of the crown portion 24 is heated, the belt pieces 18B are then arranged thereon, and then the second crossing belt layer 16B and the outer circumferential surface 24A of the crown portion 24 are welded together. Alternatively, it is also possible to firstly dispose the second crossing belt layer 16B on the outer circumferential surface 24A of the crown portion 24, and to then apply heat thereto so as to weld the outer circumferential surface 24A of the crown portion 24 and the second crossing belt layer 16B together.

The method used to bond together the first crossing belt layer 16A and the second crossing belt layer 16B is also not particularly limited. For example, a known adhesive agent may be applied to the top of the second crossing belt layer 16B, and the first crossing belt layer 16A and the second crossing belt layer 16B then bonded together. Alternatively, the first crossing belt layer 16A and the second crossing belt layer 16B may be welded together using heat so that the two layers are bonded together.

As is shown in FIG. 2, in the present exemplary embodiment, when viewed from the outer side in the tire radial direction looking towards the tire rotation axis, parallelogram-shaped planar components are used for the belt pieces 18A and the belt pieces 18B with the short sides thereof arranged in parallel with the tire circumferential direction, and the long sides thereof extending diagonally relative to the tire rotation axis. In the present exemplary embodiment, the plurality of reinforcing cords 17 provided in the belt pieces 18A and the belt pieces 18B are arranged in parallel rows running in the tire circumferential direction so as to be parallel with the long sides of the belt pieces 18A and the belt pieces 18B that extend diagonally relative to the tire rotation axis.

The method used to bond together the respective belt pieces 18A and the belt pieces 18B that are arranged adjacently to each other in the tire circumferential direction is not particularly limited, and a known adhesive agent may be used. Alternatively, the respective tire pieces may be welded together by applying heat thereto. Moreover, the number of tire pieces respectively forming the first crossing belt layer 16A and the second crossing belt layer 16B is also not particularly limited and, for example, between 2 and 40 pieces can be used. Each tire piece may, if necessary, by curved so as to protrude in the tire width direction or in the tire circumferential direction in accordance with the surface configuration of the tire frame member 12.

The material used for the reinforcing cords 17A and the reinforcing cords 17B (hereinafter, these may be referred to on occasion collectively as 'reinforcing cords 17') provided in the crossing belt layer 16 is not particularly limited, and metal wires or non-metal wires or the like may be used as is appropriate. For example, an organic fiber monofilament (i.e., a single wire), or a multifilament formed by twisting organic fibers (i.e., a stranded wire), or, alternatively, single wire or stranded wire steel cord may be used for the reinforcing cords 17. In the case of organic fiber, a material such as nylon, PET, glass, or amide or the like can be used. Additionally, the type, number, and inter-cord pitch of the reinforcing cords 17 in the crossing belt layer 16 are also not particularly limited. Furthermore, the type, number, and inter-cord pitch of the reinforcing cords 17 contained in the first crossing belt layer 16A and the second crossing belt layer 16B may all be mutually the same as each other, or may be mutually different from each other.

The type of resin material used to coat the reinforcing cords 17 is not particularly limited, and can be appropriately selected in accordance with the desired characteristics. The same type of resin materials that are able to be used for the tire structural member 12 can also be used for this resin material, and, for example, thermoplastic resins or thermoplastic elastomers can be used. The resin material contained in the first crossing belt layer 16A may be the same type of resin or a different type of resin as the resin material used for the second crossing belt layer 16B. The resin material coating the reinforcing cords 17 may be the same type of resin or a different type of resin as the resin contained in the tire frame member 12. For example, if the tire frame member 12 is formed from an amide-based thermoplastic resin elastomer, then an amide-based thermoplastic elastomer can be used as the resin material contained in both the first crossing belt layer 16A and the second crossing belt layer 16B.

The overall thickness of the crossing belt layer 16 having a layered structure is preferably between 1.6 and 5.0 mm. If the thickness of the crossing belt layer 16 is between 0.8 mm and 2.5 mm, then there is a weight reduction effect due to optimization of the resin volume, so that fuel consumption efficiency is improved. Additionally, from the standpoint of ensuring plunger strength, a ratio (x/y) between a thickness (x) of the first crossing belt layer 16A and a thickness (y) of the second crossing belt layer 16B is preferably between 1:1 and 1:2.

In the present exemplary embodiment, as is shown in FIG. 1 and FIG. 2, both ends in the tire width direction of the first crossing belt layer 16A are located on the inner side in the tire width direction of both ends in the tire width direction of the second crossing belt layer 16B.

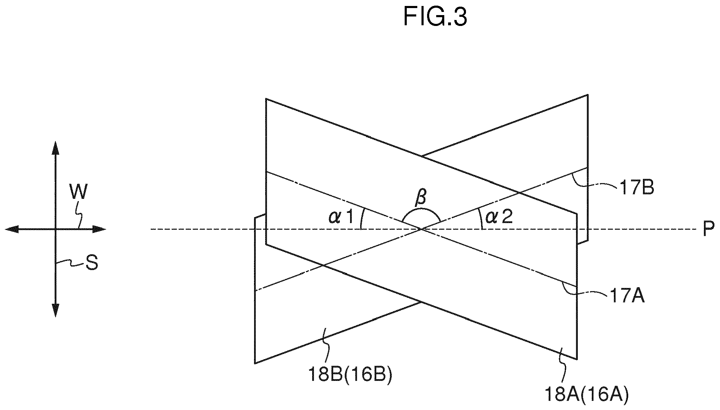

Next, through FIG. 3, an angle of inclination of the reinforcing cords 17 relative to the tire rotation axis, and an angle of intersection between reinforcing cords 17 between a plurality of the crossing belt layers 16 will be described. FIG. 3 is a schematic view illustrating an angle of inclination and an angle of intersection of the reinforcing cords 17. Moreover, FIG. 3 shows the first crossing belt layer 16A and the second crossing belt layer 16B as observed looking from the outer side in the tire radial direction towards the tire rotation axis. In FIG. 3, the belt pieces 18A and the belt pieces 18B are mutually superimposed such that end portions thereof running in the tire circumferential direction S extend in parallel with each other. In FIG. 3, the reinforcing cords 17A and the reinforcing cords 17B embedded in the belt pieces 18A and the belt pieces 18B are shown by single-dot chain lines.

In FIG. 3, the first reinforcing cords 17A provided in the belt pieces 18A forming the first crossing belt layer 16A and the second reinforcing cords 17B provided in the belt pieces 18B forming the second crossing belt layer 16B are each disposed in the first crossing belt layer 16A or the second crossing belt layer 16B so as to extend diagonally relative to the tire rotation axis P. An angle of inclination α1 of the first reinforcing cords 17A relative to the tire rotation axis P and an angle of inclination α2 of the second reinforcing cords 17B relative thereto are not particularly limited and may be set respectively, for example, to between 0.5° and 60° relative to the tire rotation axis. In the present exemplary embodiment, the angles of inclination relative to the tire rotation axis of the first reinforcing cords 17A and the second reinforcing cords 17B are mutually different, and the first reinforcing cords 17A and the second reinforcing cords 17B are arranged so as to mutually intersect each other between the first crossing belt layer 16A and the second crossing belt layer 16B. The angle of inclination α1 and the angle of inclination α2 may both be set as the same angle or as mutually different angles. In the present exemplary embodiment, the first reinforcing cords 17A and the second reinforcing cords 17B are disposed such that angle of inclination α1 and the angle of inclination α2 are each the same as the angle of inclination of the long sides of the belt pieces 18A or the belt pieces 18B relative to the tire rotation axis.

As is shown in FIG. 3, when the belt pieces 18A and the belt pieces 18B are observed looking from the outer side in the tire radial direction towards the tire axial direction, the first reinforcing cords 17A and the second reinforcing cords 17B intersect each other at an angle of intersection β. The angle of intersection β is not particularly limited and can be set between 60° and 189°. Additionally, although not shown in FIG. 3, the first crossing belt layer 16A and the second crossing belt layer 16B are provided with the plurality of first reinforcing cords 17A and second reinforcing cords 17B, and the respective plurality of angles of inclination α1 and angles of inclination α2, and the angles of intersection β are also present in the plurality of first reinforcing cords 17A and second reinforcing cords 17B. The plurality of angles of inclination α1 may be the same as or different from each other, the angles of inclination α2 may be the same as or different from each other, and the angles of intersection β may be the same as or different from each other.

### (Tread Rubber)

As is shown in FIG. 1, the tread rubber 30 is disposed as a tread layer on the outer side in the radial direction of the crown portion 24 and the crossing belt layer 16. Note that the tread rubber 30 is firstly superimposed onto the tire frame member 12, and is then adhered thereto via vulcanization.

The tread rubber 30 is formed from rubber having superior abrasion resistance compared to the resin material forming the tire frame member 12, and the same type of tread rubber as that used in conventional rubber pneumatic tires can be used for the tread rubber 30.

Moreover, grooves 30A for water drainage that extend in the tire circumferential direction are formed in the tread surface of the tread rubber 30. In the present exemplary embodiment, two grooves 30A are formed, however, the present disclosure is not limited to this, and it is possible for a greater number of grooves 30A to be formed. Additionally, a known tread pattern is used.

An action of the tire 10 according to the present exemplary embodiment will now be described. Because the crossing belt layer 16 of the present exemplary embodiment is provided with a plurality of the reinforcing cords 17 that are coated with a resin material, it has greater in-plane rigidity than a rubber-coated crossing belt layer. Because of this, the tire 10 according to the present exemplary embodiment is able to achieve lower rolling resistance and increased durability as a result of being provided with the crossing belt layer 16 that is provided with the plurality of reinforcing cords 17 which are coated with a resin material.

The tire 10 according to the present exemplary embodiment is able to achieve increased in-plane rigidity compared to when a crossing belt layer made of rubber is used. Because of this, the thickness of the tire frame member 12 can be reduced. Moreover, because a tire frame member 12 and crossing belt layer 16 that use resin instead of rubber are provided, the tire 10 has excellent recyclability. Note that a two-layer structure having the first crossing belt layer 16A and the second crossing belt layer 16B is used for the crossing belt layer 16 in the present exemplary embodiment, however, the tire of the present disclosure is not limited to this. For example, in special applications such as racing tires and the like, it is also possible for the crossing belt layer to be formed having one layer, or having three or more layers.

According to the tire 10 according to the present exemplary embodiment, the crossing belt layer 16 and the crown portion 24 of the tire frame member 12 are sufficiently bonded together via welding performed between the crossing belt layer 16 and the outer circumferential surface 24A of the crown portion 24 of the tire frame member 12. Because of this, the tire 10 according to the present exemplary embodiment also has superior tire durability.

In the tire 10 according to the present exemplary embodiment, the crossing belt layer 16 is formed by combining tire pieces that are adjacent to each other in the tire circumferential direction. Because of this, compared with when a belt-shaped crossing belt layer 16 whose longitudinal direction extends in the tire circumferential direction is used, the time and labor needed to bend and affix the crossing belt layer 16 can be eliminated, and the crossing belt layer 16 can be formed easily on the outer side in the tire radial direction of the tire frame member 12. Because of this, even if the components used in the crossing belt layer 16 are components which, for example, are difficult to bend in the tire radial direction, it is still possible to easily install the crossing belt layer 16 on the tire frame member12. Note that, in the present exemplary embodiment, firstly, the second crossing belt layer 16B is formed by positioning the belt pieces 18B on the outer circumferential surface 24A of the crown portion 24, and, subsequently, the first crossing belt layer 16A is produced by positioning the belt pieces 18A thereon, however, the present disclosure is not limited to such a method and it is also possible, for example, to first place a belt piece 18A on top of a belt piece 18B so as to form one unit, and to then join a plurality of these units together so as to form the crossing belt layer 16.

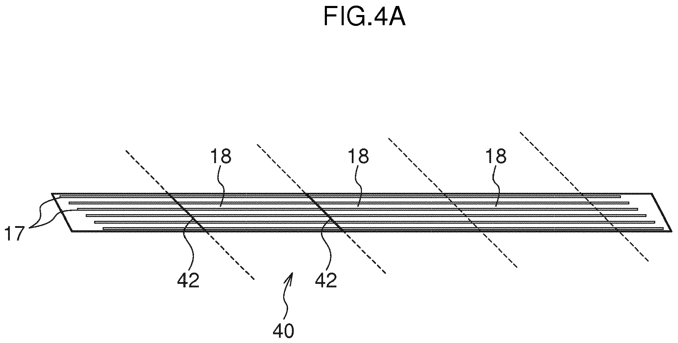

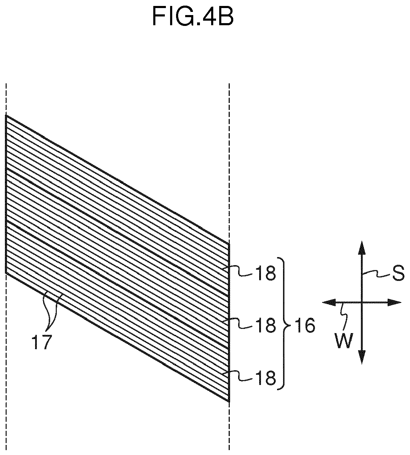

As is shown in FIG. 4, it is also possible, for example, to produce the belt pieces 18A and the belt pieces 18B using elongated resin-coated reinforcing components. FIG. 4 is an explanatory view showing an example of a method of producing belt pieces. As is shown in FIG. 4A, a resin-coated reinforcing component 40 is an elongated plate-shaped component (i.e., ply), and a plurality of the reinforcing cords 17 are arranged therein at fixed intervals extending in parallel with the long side thereof. The reinforcing cords 17 are embedded in a resin material, and the resin-coated reinforcing component 40 is formed by forming the coated plurality of reinforcing cords 17 into a single body.

As is shown in FIG. 4A, the resin-coated reinforcing component 40 is then cut into a plurality of parallelogram-shaped belt pieces 18. At this time, short sides 42 of the belt pieces 18 are cut so as to extend diagonally relative to the long sides of the resin-coated reinforcing component 40. The angle of inclination of the short sides 42 relative to the long sides of the resin-coated reinforcing component 40 is the same as the angle of inclination of the reinforcing cords 17 relative to the tire rotation axis.

Next, as is shown in FIG. 4B, the respective belt pieces 18 are arranged in the tire circumferential direction such that the short sides of the belt pieces 18 run parallel with the tire circumferential direction S. As a result, the crossing belt layer 16 having the reinforcing cords 17 that extend diagonally relative to the tire rotation axis can be easily formed.

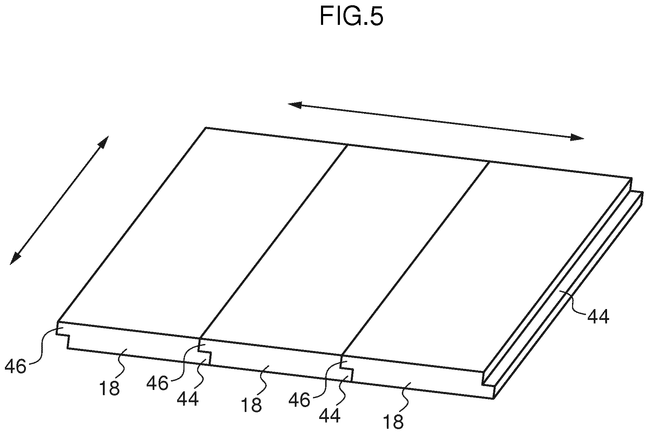

The method used to join together the belt pieces that, as is described above, have been arranged adjacently to each other in the tire circumferential direction is not particularly limited. For example, the respective tire pieces may be adhered or welded together, or alternatively, as is shown in FIG. 5, the shape of the belt pieces may be processed such that a lower protruding portion 44 is provided at one end of the adjacently placed belt pieces 18, and an upper protruding portion 46 is provided at the other end of these belt pieces, so that the lower protruding portions 44 can be combined together with the upper protruding portions 46 of mutually adjacent belt pieces 18.

### [Second Exemplary Embodiment]

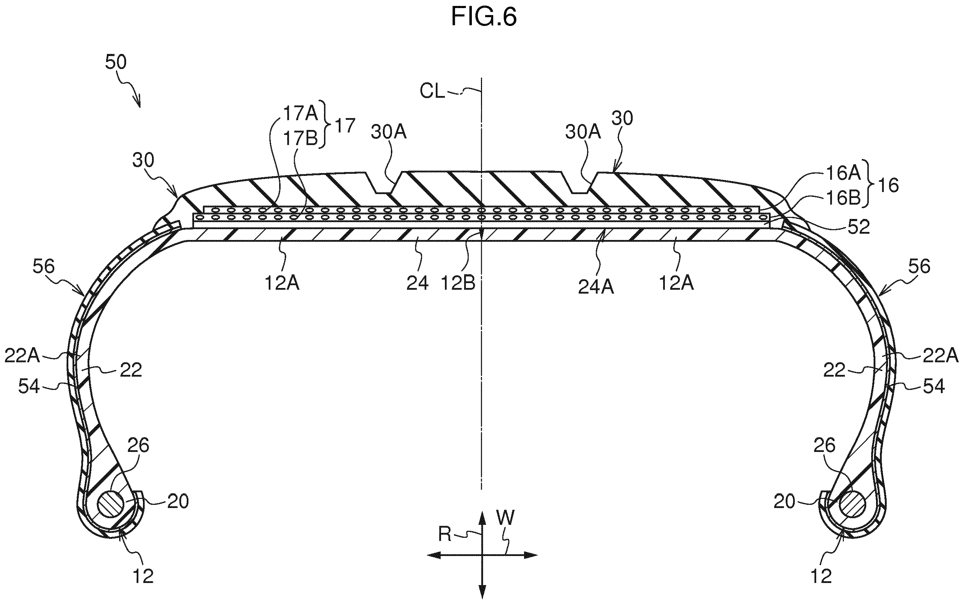

Next, a structure of a tire according to a second exemplary embodiment will be described. FIG. 6 is a cross-sectional view taken in the tire width direction showing the structure of a tire according to the second exemplary embodiment. In FIG. 6, components that are the same as those in other drawings are given the same descriptive symbols and a description thereof is omitted.

As is shown in FIG. 6, a tire 50 according to the second exemplary embodiment is provided with a tire frame member 12 which is made from resin, a resin layer 52, a crossing belt layer 16, reinforcing components 54, and tread rubber 30.

In the present exemplary embodiment, the resin layer 52 is disposed on the outer circumferential surface 24A of the crown portion 24. The resin layer 52 is a layer that bonds together the tire frame member 12 and the crossing belt layer 16, and the outer circumferential surface 24A (i.e., the outer side surface in the tire radial direction) of the crown portion 24, and the inner side surface in the tire radial direction of the crossing belt layer 16 are adhered respectively to the two surfaces of the resin layer 52.

The resin material contained in the resin layer 52 is not particularly limited, and the adhesive agent that is used to adhere the resin layer 52 to the resin material used for the crown portion 24 of the tire frame member 12, and the adhesive agent that is used to adhere the resin layer 52 to the resin material used for the second crossing belt layer 16B can be appropriately selected in accordance with these respective types of resin materials. Examples of the adhesive agent include an RFL-based adhesive agent, which is a water-dispersible adhesive agent, and Metaloc (Registered Trademark; manufactured by Toyokagaku Kenkyusho Co., LTD.). If, for example, an amide-based thermoplastic elastomer is used for both the tire frame member 12 and the second crossing belt layer 16B, then an epoxy-based adhesive agent, or an isocyanate-based adhesive agent can be used.

Moreover, a welding resin can be used for the resin material contained in the resin layer 52. Examples of this welding resin include thermoplastic resins and thermoplastic elastomers. The same type of resin as at least one of the resins contained in the tire frame member 12 and the crossing belt layer 16, or a resin that, in spite of being a different type of resin from at least one of the resins contained in the tire frame member 12 and the crossing belt layer 16, still has compatibility therewith can be used as the welding resin. Here, the term 'same type of resin' refers to one resin having structure that is common with the characteristic molecular structure of the other resin. For example, if both the tire frame member 12 and the second crossing belt layer 16B are formed from an amide-based thermoplastic elastomer, then an amide-based thermoplastic resin can be used. The welding resin is preferably what is known as a hot-melt resin material that is melted by heat so as to adhere to an adherend.

The thickness of the resin layer 52 is preferably between 0.001 mm and 0.500 mm. If the thickness of the resin layer 52 is between 0.001 mm and 0.500 mm, the tire frame member 12 and the crossing belt layer 16 can be properly bonded together. A thickness of between 0.001 mm and 0.100 mm for the resin layer 52 is even more preferable, and between 0.005 mm and 0.020 mm is particularly preferable. In the present exemplary embodiment, the resin layer 52 is formed by a single layer, however, a layered structure of two or more layers may also be employed.

The method used to form the resin layer 52 on the surface of the crown portion 24 is not particularly limited, and a known appropriate method may be applied. For example, the resin layer 52 may be formed by applying the adhesive agent used to form the resin layer 52 onto the crown portion 24 via a coating process or the like, or alternatively, the resin layer 52 may be formed by affixing a belt-shaped resin layer 52 that extends in the tire circumferential direction onto the crown portion 24.

In the present exemplary embodiment, a pair of reinforcing components 54 are provided on the outer circumferential surface of the tire frame member 12. The reinforcing components 54 are provided with a plurality of reinforcing cords that are coated with rubber. The reinforcing components 54 extend from the outer circumferential surface of one bead portion 20 of the tire frame member 12 as far as the outer surface of the side portion 22. An end portion on the outer side in the tire radial direction of the reinforcing components 54 is positioned in an area above the end portion on the outer side in the tire width direction of the crown portion 24, and is covered by an end portion on the outer side in the tire width direction of the tread rubber 30. Note that the end portion on the outer side in the tire radial direction of the reinforcing components 54 may overlap with the crossing belt layer 16, or alternatively, an end portion of one reinforcing component 54 may overlap with an end portion of the other reinforcing component 54.

The reinforcing cords used in the reinforcing component 54 are an organic fiber monofilament (i.e., a single wire), or a multifilament formed by twisting organic fibers (i.e., a stranded wire), and are arranged so as to extend respectively in the radial direction and be parallel with each other in the tire circumferential direction. Note that the angle of the reinforcing cords is inclined within a range of not more than 10 degrees relative to the radial direction.

A material such as nylon, PET, glass, or amide or the like can be used for the organic fibers. Note that it is also possible for a metal such as steel or the like to be used for the material of the reinforcing cords. Additionally, the reinforcing cords of the reinforcing components 54 may be coated in resin instead of rubber.

A pair of covering rubber layers 56 that extend from the bead portions 20 of the tire frame member 12 to the outer side in the tire width direction of the crown portion 24 are provided on an outer surface of the reinforcing components 54. The same type of rubber as that used in side walls of conventional rubber pneumatic tires can be used for the covering rubber layers 56. End portions on the inner side in the tire radial direction of the covering rubber layers 56 extend respectively as far as an inner circumferential surface of the bead portions 20 of the tire frame member 12, so that both end portions of the reinforcing components 54 are covered by the covering rubber layers 56.

An action of the tire 50 according to the present exemplary embodiment will now be described. In the tire 50 according to the present exemplary embodiment, because the outer surface of the tire frame member 12 is covered by the reinforcing components 54, even if the tire frame member 12 is formed having a reduced thickness, it is possible to suppress any decrease in the pressure-resistance capabilities and the cut-resistance capabilities thereof.

More specifically, by reinforcing the tire frame member 12 using the reinforcing components 54, it is possible to improve the cut-resistance capabilities thereof. Additionally, by causing a portion of the tensile force generated in the tire frame member 12 to be distributed to the reinforcing components 54, internal pressure is able to be maintained so that the pressure-resistance capabilities can be improved.

Moreover, because the reinforcing components 54 are formed by coating reinforcing cords with rubber, processing is simple. Furthermore, because the adhesiveness between the reinforcing components 54 and the covering rubber layers 56 and tread rubber 30 is extremely high, the durability of the tire can be improved. Note that UV degradation of the reinforcing components 54 can also be suppressed by using the covering rubber layers 56.

Furthermore, in the present exemplary embodiment, the crossing belt layer 16 and the crown portion 24 of the tire frame member 12 are adhered together via the resin layer 52, so that the crossing belt layer 16 and the crown portion 24 are firmly bonded together. Because of this, the tire 10 according to the present exemplary embodiment has superior tire durability. Additionally, by setting the thickness of the resin layer 52 to between 0.001 mm and 0.500 mm, the crossing belt layer 16 and the crown portion 24 of the tire frame member 12 can be bonded together even more firmly.

### [Additional Embodiments]

Note that exemplary embodiments of the present disclosure have been described and illustrated above, however, the present disclosure is not limited to these exemplary embodiments, and various other exemplary embodiments are possible insofar as they do not depart from the spirit or scope of the present disclosure.

For example, in the second exemplary embodiment, the reinforcing components 54 are arranged so as to extend around the entire circumference of the tire in the tire circumferential direction, however, it is also possible for the reinforcing components to be formed by arranging a plurality of reinforcing component pieces that extend in the radial direction adjacently to each other in the tire circumferential direction. In this case, if the reinforcing component pieces are shaped so that they each taper inwards towards an end portion side thereof that is positioned on the inner side in the tire radial direction, then there is no concern that the reinforcing component pieces will overlap each other on the side where the diameter of the bead portions 20 becomes narrower.

Furthermore, the above-described first exemplary embodiment and second exemplary embodiment can also be combined together in an appropriate manner. For example, it is also possible for the reinforcing components 54 of the second exemplary embodiment to be provided on the outer surface of the tire frame member 12 of the first exemplary embodiment. Furthermore, in the first exemplary embodiment and the second exemplary embodiment, a mode is employed in which the crossing belt layer is formed by combining belt pieces together, however, the present disclosure is not limited to this. For example, it is also possible to employ a structure in which an elongated belt-shaped crossing belt layer is formed, and this belt-shaped crossing belt layer is then disposed so as to extend around the entire circumference of the tire in the tire circumferential direction.

Priority is claimed on Japanese Patent Application No. 2016-101858, filed May 20, 2016, the disclosure of which is incorporated herein by reference.

All references, patent applications and technical specifications cited in the present specification are incorporated by reference into the present specification to the same extent as if the individual references, patent applications and technical specifications were specifically and individually recited as being incorporated by reference.

## Claims

1. A tire comprising:
a tire frame member that is made from resin and has a pair of bead portions, a pair of side portions that extend from the bead portions towards an outer side in a tire radial direction, and a crown portion that connects an outer side end in the tire radial direction of one side portion to an outer side end in the tire radial direction of another side portion; and
a crossing belt layer that is provided with a plurality of reinforcing cords that are arranged in rows which are inclined relative to a tire rotation axis of the tire frame member and are coated with a resin material, the crossing belt layer being disposed either directly or via a resin layer on an outer side surface in the tire radial direction of the crown portion.

2. The tire according to claim 1, wherein the outer side surface in the tire radial direction of the crown portion and an inner side surface in the tire radial direction of the crossing belt layer are thermally welded together.

3. The tire according to claim 1, wherein the resin layer is adhered to the outer side surface in the tire radial direction of the crown portion and to an inner side surface in the tire radial direction of the crossing belt layer.

4. The tire according to claim 3, wherein a thickness of the resin layer is between 0.001 mm and 0.500 mm.

5. The tire according to any one of claims 1 through 4, wherein the crossing belt layer is formed by a plurality of belt pieces that are arranged adjacently to each other in a tire circumferential direction.

6. The tire according to any one of claims 1 through 5, wherein the crossing belt layer has a layer structure comprising a plurality of layers, and the reinforcing cords contained in one layer out of the plurality of layers and the reinforcing cords contained in another layer out of the plurality of layers are arranged so as to mutually intersect each other between the layers.

7. The tire according to any one of claims 1 through 6, further comprising reinforcing components that are provided with a plurality of cords which are coated with resin or rubber, and that cover at least an outer surface of the side portions.
